# EUROPEAN PATENT APPLICATION

(11) **EP 2 009 646 A1**
(43) Date of publication of application: **31.12.2008**
(21) Application number: 07111139.7
(22) Date of filing: 27.06.2007
(51) Int. Cl.: H01B 7/282, H01B 17/50

(54) **Electrical insulator and a method for manufacturing an electric insulator**

(71) Applicant: ABB Research Ltd., 8050 Zürich (CH)
(72) Inventor: Roseen, Patrik, 724 63, Västerås (SE); Maxwell, Andrew, 722 46, Västerås (SE); Hillborg, Henrik, 722 10, Västerås (SE)
(74) Representative: Dahlstrand, Björn

(57) **Abstract**

An electrical insulator (1,7) and a method for manufacturing the electrical insulator. The electrical insulator (1,7) comprises an insulating body (2,8) having an outer surface (6,12), where a hydrophobic material is arranged on at least one hydrophobic part (3,9) of the outer surface (6,12), that the area of the at least one hydrophobic part (3,9) is smaller than the entire area of the outer surface (6,12), and that the hydrophobic part is arranged such that hydrophobic material from the hydrophobic part (3,9) continuously migrates to the remaining part of the outer surface.

## Description

### TECHNICAL FIELD

The present invention relates to an electrical insulator and a method for manufacturing an electrical insulator.

### BACKGROUND ART

An electric insulator is usually used for supporting an electric conductor, separating it from the grounded parts of an electric power system. In this description and the following claims the term "insulator" also refers to all types of insulating casings intended to contain electric equipment, such as bushings, and electrical apparatus e.g. switchgear and measuring transformers. Further, in this description and the following claims "medium voltages" refers to voltages from 1 kV up to 36 kV, and "high voltages" refers to voltages above 36 kV.

In many cases, electrical insulators for medium or high voltage applications have used a thermosetting resin such as epoxy as an electrically insulating material. Apart from having good insulating properties, such a material also has a desirable strength enabling it to be used as load-carrying material, for example in electric bushings.

A new insulating part made from a thermosetting resin such as epoxy has some initial hydrophobicity. In a moisture-containing environment, this will prevent a continuous film of water from gathering on the surface. However, the hydrophobicity of the surface of an element made of epoxy will rapidly decrease under wet conditions and a continuous film of water will be able to form on the surface. The existence of such a film, especially in combination with conducting pollution, will lead to discharges and leakage currents which will result in surface ageing and may eventually cause electrical and/or mechanical failure of the insulator.

Silicone rubber has much better outdoor insulation properties than epoxy since it is hydrophobic and since the surface regenerates its hydrophobic properties by a transport of low molecular chains of silicone oil to the surface.
It is well known that covering an insulator of ceramic or plastic, such as epoxy, with a thin layer of silicone rubber will prevent the formation of continuous electrically conductive films on the insulator surface by producing a hydrophobic surface.

For example, US 5,916,937, discloses an insulator of epoxy where the surface is covered with a coating of silicone that withstands the electrical potential gradient under atmospheric conditions. The covering of silicone in US 5,916,937 is constituted by a shrinkable silicone sleeve, by overmolding the insulator of epoxy with silicone, or by spraying the outer surface of the insulator with silicone.

It is also known that silicone rubber can be used as a material for insulators in medium- and high-voltage applications. However, it does not have the mechanical properties to be used as a load carrying element like, for example, epoxy, and it is also a more expensive material.

In order to lower production costs and due to the possibility of recycling, thermoplastic polymers, such as polyethylene, has been found to be an alternative to epoxy as insulation material in medium and high voltage applications. However, for parts in non-sealed environments, there is a risk of surface ageing during severe conditions, such as high humidity and/or pollutions. The ageing characteristics of thermoplastics are not as good as filled epoxy due to lower arc and tracking resistance. This problem can be solved by developing a thermoplastic material grade using additives. As this will probably generate a special material grade, the material cost will be higher than for an already commercially available thermoplastic.

EP 1103986 discloses that additives can be used to obtain an electrical insulator of a thermoplastic polymer to obtain a surface on the insulator which is hydrophobic and that prevent tracking on the surface. EP 1103986 discloses a silane-grafted, cross-linkable polyolefin, for use as an insulating material.

### SUMMARY OF THE INVENTION

The object of the invention is to provide an electrical insulator comprising an insulating body, where the surface of the insulating body is hydrophobic to prevent the formation of a water film on the surface of the insulator in humid environments. It is also an object of the invention to provide a method of producing such an insulator. The method for producing the insulator should be simple and cost effective.

According to a first aspect this object is obtained by an electrical insulator having the features of claim 1.

Advantageous embodiments of the invention will be clear from the description below and in the dependent claims.

According to one embodiment an electrical insulator comprises an insulating body having an outer surface, where a hydrophobic material is arranged on at least one hydrophobic part of the outer surface. The surface area of the at least one hydrophobic part is smaller than the entire area of the outer surface, and the hydrophobic part is arranged such that hydrophobic material from the hydrophobic part continuously migrates to the remaining part of the outer surface. Therewith a continuous supply of hydrophobic material which will migrate to the insulator surface throughout the insulators lifetime is provided. The hydrophobic material migrates at least to the part of the remaining part abutting the hydrophobic part. The location and size of the at least one hydrophobic part depends on the type of insulator as well as the size of insulator. With hydrophobic parts, no conductive path bridging the surface will be formed, and no significant surface aging due to leakage currents will occur.

According to one embodiment the insulating body comprises one of the following: porcelain, glass, or a polymer. The polymer comprises, for example, an epoxy, a thermoplastic, or a thermoplastic elastomer.

According to one embodiment of the invention the insulating body comprises a thermoplastic or a thermoplastic elastomer. The thermoplastic is, for example, polyethylene (PE) or polyamide (PA). By combining an insulator of a thermoplastic material with a part of hydrophobic material on the surface, such that substantially the entire surface of the insulator becomes hydrophobic, an insulator that has the mechanical properties of a thermoplastic material and the hydrophobic properties of the hydrophobic material is achieved, and electrical-discharge ageing of the insulator surface under wet condition due to e.g. condensation, is avoided. Also, the insulator is very cost effective due to the short cycle times during manufacturing of the thermoplastic insulator and to the little amount of hydrophobic material that is needed to achieve a long-lasting hydrophobic surface on the insulating body. Further, the thermoplastic insulator is environmentally friendly as it is possible to recycle thermoplastics.

According to one embodiment the dimension and location of the at least one hydrophobic part is adapted to the size of the insulating body, such that the migration of hydrophobic material from the hydrophobic part covers the remaining part of the outer surface of the insulator partially or fully. For example, with a smaller distance between the hydrophobic parts, the migrated hydrophobic material will generally cover a larger part of the remaining part of the outer surface, compared to a larger distances between hydrophobic parts of the same size.

According to one embodiment the width of the hydrophobic part is designed to avoid leakage currents or dry-band arcing on the outer surface of the electrical insulator when wet.

According to one embodiment the hydrophobic material is silicone. The silicone is, for example, silicone rubber, silicone oil or silicone gel. The insulator is very cost effective due to the little amount of hydrophobic material that is needed to achieve a hydrophobic surface on the insulator compared to, for example, covering the entire surface with silicone. Examples of silicone rubber are LSR (Liquid silicone rubber), HTV (High temperature vulcanizing) silicone rubber or RTV-silicone (Room-temperature vulcanizing). Silicone rubber is a well known hydrophobic material and due to the diffusion of silicone oil from the rubber part the hydrophobic area on the electrical insulator will be larger than the area of the applied part. By combining an insulating body of, for example, a thermoplastic material with at least one part of silicone on the outer surface of the insulating body, such that substantially the entire surface of the insulator becomes hydrophobic due to the migration of uncrossed linked silicone from the hydrophobic part, an insulator that has the mechanical properties of a thermoplastic material and the hydrophobic properties of silicone is achieved. Also, electrical-discharge ageing of the insulator surface is avoided.

According to one embodiment of the invention, the hydrophobic material is a thermoplastic elastomer comprising silicone.

According to one embodiment the insulating body comprises at least two insulating sheds arranged on an insulating core, and at least one hydrophobic part is arranged on the surface between the sheds. The size of the applied hydrophobic part is adapted to the size of the insulator, and the hydrophobic material from the hydrophobic part migrates to the outer surface of the insulating body comprising the surface of the at least two sheds.

According to one embodiment the at least one hydrophobic part is arranged in a recess arranged in the surface of the insulating body. By arranging the at least one hydrophobic part in a recess the surface of the insulator will be smoother than if the string is applied on the surface. A smooth surface prevents concentrations of the electric field on the surface as well as concentrations of water and dirt which could accelerate the aging of the surface material.

According to one embodiment the at least one hydrophobic part is applied in the form of a string of hydrophobic material. By applying the material in the form of a string, the hydrophobic material could be applied on the surface with for example a nozzle, which would be a simple and cost effective way to achieve a hydrophobic surface on an electrical insulator.

According to one embodiment the at least one string of hydrophobic material is arranged such that it is perpendicular to the direction of the electric field on the insulators surface when the electrical insulator is in operation.

According to one embodiment the insulator is an indoor insulator. The lack of rain will make the effect of the diffused silicone permanent through the life-time of the insulator, as the hydrophobic material that has diffused over the surface will not be flushed away.

According to an alternative to the above described embodiment the insulator is an outdoor insulator.

According to a second aspect the object of the invention is obtained by a method for manufacturing an electrical insulator according to claim 9.

According to one embodiment of the invention the method for manufacturing an electrical insulator comprises manufacturing an insulating body with an outer surface, comprising applying a hydrophobic material on at least one hydrophobic part of the outer surface, such that the area of the at least one hydrophobic part is smaller than the area of the outer surface, arranging the hydrophobic part such that hydrophobic material from the hydrophobic part continuously migrates to the remaining part of the outer surface.

According to one embodiment the method comprises manufacturing the insulating body by molding. The insulating body comprises, for example, a thermoplastic, a thermoplastic elastomer or epoxy.

According to one embodiment of the invention the method comprises applying the hydrophobic part on the insulating body with a nozzle. The nozzle is, for example, attached to a robot, which is programmed to serve a variety of different insulators. Also, the nozzle could be used to apply the hydrophobic part by hand, if, for example, the hydrophobicity of a surface of an insulator already in use should be improved.

According to one embodiment of the invention the at least one part is applied by using a robot which could be programmed to handle a large selection of different types and sizes of insulators. By using a robot it is easy to individually adapt the size, the shape and/or the location of the hydrophobic part on the insulating body depending on the type of insulator such that the hydrophobic material from the applied hydrophobic part diffuses over substantially the entire surface of the electrical insulator. One single robot can be used to serve a variety of insulators which gives a very flexible, fully atomized production method, making it possible to tailor-make the properties of the insulator. As no mold is necessary for applying the hydrophobic material to the outer surface of the insulating body it is a cost-effective way of producing a polymer insulator with improved properties.

According to an alternative embodiment of the invention the method comprises applying the at least one hydrophobic part of material by molding, such as injection molding. Preferably, the alternative method comprises injection molding the insulating body of a thermoplastic, and applying the part of hydrophobic material with a second injection molding. After the insulating body is molded by a fist injection molding it is placed in a second mold, comprising recesses corresponding to the shape of the at least one part of hydrophobic material that is to be applied on the surface of the insulating body.

According to one embodiment of the invention the method comprises making a recess, adapted to receive the at least one part of hydrophobic material, on the insulator surface before applying the hydrophobic part. Arranging the string of hydrophobic material in the groove gives a surface which is smoother compared to if the string is applied on the insulator surface.

According to one embodiment of the invention the method comprises rotating the insulating body, while the string is applied with the extruder.

The electrical insulator is, for example, used in switchgear, medium voltage electrical apparatuses, bushings, cable terminations or measuring transformers.

### BRIEF DESCRIPTION OF THE DRAWINGS

The invention will be described with reference to the accompanying drawings, wherein
Figure 1 schematically shows an electrical insulator with strings comprising a hydrophobic material, and
Figure 2 schematically shows an alternative embodiment of the electrical insulator.

### DESCRIPTION OF PREFERRED EMBODIMENTS

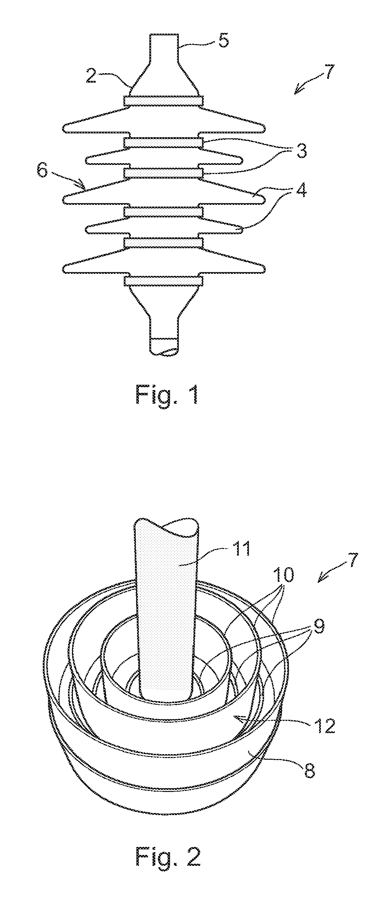

Figure 1 shows an electrical insulator 1 comprising a polymeric insulating body 2 comprising an outer surface 6. The insulating body 2 comprises several sheds 4 arranged on an insulating core 5. The insulating body 2 is made of a thermoplastic or of epoxy. A plurality of strings 3 of a hydrophobic material is arranged on the outer surface 6 and between the sheds. The hydrophobic material is silicone rubber or a thermoplastic elastomer comprising silicone.

The dimension of the strings 3 between the sheds 4 is adapted to the size and type of electrical insulator 1, such that the migration of silicone from the strings at least partly covers the surface of the sheds. Under wet conditions, the resulting electrical field over the hydrophobic part should be kept below 3 kV/cm. Also, the width of the hydrophobic part is designed to avoid leakage currents or dry-band arcing when wet.

The insulating body 2 of the electric insulator 1 is manufactured in a known way, for example, by molding. The strings 3 of hydrophobic material are then applied on the surface of the insulating body 2 through a nozzle attached to a robot. The robot is preferably programmed to handle a large range of different insulator sizes. The surface that the applied strings 3 cover is smaller than the size of the surface not covered by the strings.

According to an alternative embodiment of the invention the string 3 of hydrophobic material is applied on the outer surface of the insulating body by injection molding. The insulating body is injection molded to a desired shape in a first mould. Thereafter the molded body is placed in a second mold, comprising recesses corresponding to the shape of the string 3 of hydrophobic material that is to be applied on the surface of the insulating body 2. The hydrophobic material, for example silicone, is introduced into the second mold, and the hydrophobic material is forming hydrophobic parts on the outer surface of the insulating body. The molded insulating body is let to cool and hydrophobic material from the hydrophobic parts begins to migrate over the outer surface of the insulating body.

Figure 2 shows an electrical insulator 7 in the form of a bushing comprising an insulating body 8 for connecting a cable 11 to a indoor medium voltage apparatus. The insulating body 8 is made of a thermoplastic or epoxy and comprises insulating sheds 10. Strings 9 of a hydrophobic material are arranged on the outer surface 12 of the insulating body and between the insulating sheds. The dimension of the strings 9 is adapted to the size of the insulator 7 such that the migration of silicone from the string at least partly covers the surface of the insulating body 8.

The invention is not in any way limited to the preferred embodiments described above. On the contrary, several possibilities to modifications thereof should be evident to a person skilled in the art, without deviating from the basic idea of the invention as defined in the appended claims. For example the surface of the insulator could be activated before the hydrophobic string is applied to the surface, or the hydrophobic material could comprise a primer, to enhance the attachment of the hydrophobic string to the surface.

## Claims

1. An electrical insulator (1,7) comprising an insulating body (2,8) having an outer surface (6,12), **characterized in that** a hydrophobic material is arranged on at least one hydrophobic part (3,9) of the outer surface (6,12), that the surface area of the at least one hydrophobic part (3,9) is smaller than the entire area of the outer surface (6,12), and that the hydrophobic part is arranged such that hydrophobic material from the hydrophobic part (3,9) continuously migrates to the remaining part of the outer surface.

2. An electrical insulator (1,7) according to claim 1, wherein the insulating body (2,8) comprises a thermoplastic, thermoplastic elastomer, epoxy, porcelain or glass.

3. An electrical insulator according to any of claims 1-2, wherein the dimension and location of the at least one hydrophobic part (3,9) is adapted to the size of the insulating body (2,8) such that the migration of hydrophobic material from the at least one hydrophobic part (3,9) covers the remaining part of the outer surface of the insulator partially or fully.

4. An electrical insulator according to any of the preceding claims, wherein the hydrophobic material comprises silicone.

5. An electrical insulator according to any of the preceding claims, wherein the hydrophobic material is a thermoplastic elastomer comprising silicone.

6. An electrical insulator according to any of the preceding claims, wherein the insulating body (2,8) comprises at least two insulating sheds (4,10) and that the at least one hydrophobic part (3,9) is arranged on a surface between the sheds (4,10).

7. An electrical insulator according to any of the preceding claims, wherein the at least one hydrophobic part (3,9) is arranged in a recess arranged in the surface of the insulating body (2,8).

8. An electrical insulator according to any of the preceding claims, wherein the at least one hydrophobic part (3,9) is applied in the form of a string of hydrophobic material.

9. A method for manufacturing an electrical insulator, comprising manufacturing an insulating body (2,8) having an outer surface (6,12), **characterized by** applying a hydrophobic material on at least one hydrophobic part (3,9) of the outer surface (6,12), such that the area of the at least one hydrophobic part (3,9) is smaller than the area of the outer surface (6,12), and arranging the hydrophobic part such that hydrophobic material from the hydrophobic part continuously migrates to the remaining part of the outer surface (6,12).

10. A method according to claim 9, comprising manufacturing the insulating body (2) by molding.

11. A method according to claim 9 or 10, wherein the insulating body (2,8) comprises a thermoplastic, thermoplastic elastomer, epoxy, porcelain or glass.

12. A method according to any one of claims 9-11, adapting the size of the hydrophobic part (3,9) and/or the distance between the parts (3,9) such that the migration of hydrophobic material from the at least one hydrophobic part (3,9) covers the remaining part of the outer surface partially or fully.

13. A method according to any one of claims 9-12, comprising applying the at least one hydrophobic part (3,9) of hydrophobic material with a nozzle.

14. A method according to any one of claims 9-13, comprising applying the at least one hydrophobic part (3,9) of hydrophobic material with a robot.

15. A method according to any of claims 9-12, comprising applying the at least one hydrophobic part (3,9) of hydrophobic material by injection molding.

16. A method according to claim 9 or 10, comprising injection molding the insulating body (2,8) of a thermoplastic, and applying the at least one hydrophobic part (3,9) of hydrophobic material with a second injection molding.

17. A method according to any of claims 9-16, wherein the hydrophobic material comprises silicone.
